(19) Europäisches Patentamt / European Patent Office / Office européen des brevets

(11) **EP 4 749 171 A1**

(12) **DEMANDE DE BREVET EUROPEEN**

(43) Date de publication:
**27.05.2026 Bulletin 2026/22**

(21) Numéro de dépôt: **25217772.0**

(22) Date de dépôt: **21.11.2025**

(51) Classification Internationale des Brevets (IPC):
**F16L 29/04** (2006.01)    **F16L 37/34** (2006.01)

(52) Classification Coopérative des Brevets (CPC):
**F16L 29/04; F16L 37/34**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **22.11.2024 FR 2412843**

(71) Demandeur: **CRYOPAL**
**77600 Bussy Saint-Georges (FR)**

(72) Inventeur: **Lekhel, Manal**
**77200 Torcy (FR)**

(74) Mandataire: **Delaveau, Sophie**
**ARDAN**
**18 avenue de l'Opera**
**75001 Paris (FR)**

(54) **CLAPET ET RACCORD ASSOCIÉ COMPORTANT UN TEL CLAPET POUR UN DISPOSITIF DE COUPLAGE DE CONDUITE DE FLUIDE**

(57)  L'invention porte principalement sur un clapet (7) pour raccord (1) de dispositif de couplage de conduite de fluide (4), qui s'étend selon un axe principal longitudinal (XX') et qui présente une tête de clapet (8,8a,8b) surmontant une tige (17), et qui est caractérisé en ce que ladite tête de clapet (8,8a,8b) présente une extrémité libre (11) destinée à faire au moins en partie saillie de l'extrémité de couplage (4) du raccord (1) en position fermée de prise étanche, laquelle extrémité libre (11) se prolonge par une collerette coaxiale (14) jusqu'à une base de jonction (15) avec la tige (17), en ce qu'un épaulement coaxial (12) forme jonction entre l'extrémité libre (11) et la collerette coaxiale (14), lequel épaulement coaxial (12) s'étend radialement jusqu'à une arête périmétrique annulaire (13) qui surmonte la collerette coaxiale (14) et qui présente un diamètre supérieur au diamètre de ladite extrémité libre (11), et en ce que l'arête périmétrique annulaire (13) est en polymère thermoplastique fluoré.

L'invention porte en outre sur un raccord intégrant un tel clapet et sur un dispositif de couplage de conduite de fluide intégrant un tel raccord.

[Fig. 4]

EP 4 749 171 A1

[Fig. 5]

**Description**

**DOMAINE TECHNIQUE DE L'INVENTION**

Le domaine technique de l'invention est celui des dispositifs de couplage de conduite de fluide, et plus particulièrement de fluide cryogénique.

**ARRIERE-PLAN TECHNOLOGIQUE DE L'INVENTION**

Les dispositifs de couplage sont connus pour transférer des fluides, notamment des fluides cryogéniques, depuis un réservoir de stockage vers un réservoir d'utilisation mobile.

Pour ce faire, le dispositif de couplage présente un premier raccord mâle et un second raccord femelle qui sont des vannes à clapet dont les extrémités sont disposées en aboutement. Chaque vanne comporte un orifice de passage du fluide duquel dépasse un clapet en appui sur un ressort. En position de repos, le ressort maintient les clapets en prise dans les orifices de passage du fluide respectifs, le raccord étant ainsi en position fermée. Le couplage des raccords engendre un déplacement des ressorts et donc des clapets. Sous l'effet du couplage, le déplacement des clapets engendre la création d'un orifice de passage. Le dispositif dans son ensemble passe alors d'une position dans laquelle les deux raccords mâle et femelle sont fermés, à une position dans laquelle les deux raccords mâle et femelle sont ouverts, en assurant le transfert du fluide à travers le dispositif de couplage.

Le raccord mâle du dispositif présente souvent des contraintes spécifiques liées aux caractéristiques de son ressort et à la géométrie de son corps et son clapet. Le raccord mâle doit donc être adapté au raccord femelle.

Le raccord mâle est notamment soumis à plus de 10 000 cycles pendant sa durée de vie et subit des variations de température allant de la température ambiante à -196°C. Ces contraintes peuvent dégrader les performances d'étanchéité du raccord entraînant un remplacement trop précoce de ce raccord ou un mauvais fonctionnement de ce dernier.

Les raccords connus qui comportent généralement un joint périphérique au niveau de la collerette d'appui de la vanne à clapet contre la face intérieure du raccord, engendrent souvent un certain nombre de problèmes dont notamment un taux de fuite variable et proche du critère limite défini à $10^{-3}$ mbar.l/s, un mauvais replacement du clapet en position d'obturation, ainsi qu'un risque de délogement de la collerette d'appui.

Dans ce contexte, l'invention vise un clapet et un raccord comportant un tel clapet et formant partie mâle d'un dispositif de couplage de fluide qui pallie les inconvénients précités en présentant un niveau d'étanchéité suffisamment élevé pour assurer des performances optimums sur toute la durée de vie de la pièce. L'invention n'est néanmoins pas limitée à un clapet à intégrer dans un raccord mâle, mais vise également un clapet qui s'adapte à tout raccord.

**RESUME DE L'INVENTION**

A cet effet, le clapet (7,7a,7b) pour raccord de dispositif de couplage de conduite de fluide, qui s'étend selon un axe principal longitudinal (XX') et qui présente une tête de clapet (8,8a,8b) surmontant une tige (17), est essentiellement caractérisé en ce que ladite tête de clapet (8,8a,8b) présente une extrémité libre (11) destinée à faire au moins en partie saillie de l'extrémité de couplage (4) du raccord (1) en position fermée de prise étanche, laquelle extrémité libre (11) se prolonge par une collerette coaxiale (14) jusqu'à une base de jonction (15) avec la tige (17) en ce qu'un épaulement coaxial (12) forme jonction entre l'extrémité libre (11) et la collerette coaxiale (14), lequel épaulement coaxial (12) s'étend radialement jusqu'à une arête périmétrique annulaire (13) qui surmonte la collerette coaxiale (14) et qui présente un diamètre supérieur au diamètre de ladite extrémité libre (11), et en ce que l'arête périmétrique annulaire (13) est en polymère thermoplastique fluoré.

Le clapet de l'invention peut également comporter les caractéristiques optionnelles suivantes considérées isolément ou selon toutes les combinaisons techniques possibles :

- le clapet est réalisé en une seule pièce
- l'épaulement coaxial (12) qui forme jonction entre l'extrémité libre (11) et la collerette coaxiale (14) élargit le diamètre de la tête de clapet (8) entre l'extrémité libre (11) et la collerette (14), le diamètre moyen de la collerette (14) étant supérieur au diamètre moyen de l'extrémité libre (11).
- l'épaulement coaxial (12) s'étend transversalement à l'axe longitudinal (XX') jusqu'à l'arête périmétrique annulaire (13).
- selon une variante, la collerette coaxiale (14b) est cylindrique et s'étend longitudinalement depuis l'arête périmétrique annulaire (13) jusqu'à la base de jonction (15).
- selon une autre variante, la collerette coaxiale (14,14a) présente une première partie tronconique (161,161a) qui s'étend longitudinalement en s'élargissant depuis l'arête périmétrique annulaire (13) jusqu'à une seconde partie cylindrique (162,162a) qui s'étend longitudinalement jusqu'à la base de jonction (15)

- le polymère thermoplastique fluoré est du polychlorotrifluoroethylene.
- le clapet est intégralement réalisé en polychlorotrifluoroethylene.
- la surface de l'arête périmétrique annulaire (13) est inférieure à 12mm2.

Un autre aspect de l'invention concerne un raccord destiné à former partie mâle d'un dispositif de couplage de conduite de fluide, et comportant :

- un corps longitudinal (2) qui s'étend depuis une extrémité de jonction à une conduite (3) jusqu'à une extrémité de couplage (4) à un second raccord coopérant du dispositif de couplage, laquelle extrémité de couplage (4) présente un orifice de passage du fluide (5) en communication fluidique avec un canal d'écoulement (6) ménagé dans le corps longitudinal (2) et qui s'étend depuis l'extrémité de couplage (4) jusqu'à l'extrémité de jonction (3),
- un clapet (7,7a,7b) tel que précédemment défini, disposé dans le canal d'écoulement (6) du corps longitudinal (2), dont l'axe principal s'étend selon l'axe principal (XX') du corps longitudinal (2) du raccord (1), et qui comporte une tête de clapet (8,8a,8b) surmontant une tige (17), laquelle tête de clapet (8, 8a, 8b) est située au niveau de l'orifice de passage (5) de l'extrémité de couplage (4) du corps longitudinal (2), s'étend longitudinalement entre son extrémité libre (11) et la base de jonction (15) avec la tige longitudinale (17), et est déplaçable longitudinalement dans le canal d'écoulement (6) par l'application d'un effort (F) sur ladite tête de clapet (8,8a8b) par des moyens d'actionnement (9) entre une position dégagée dans laquelle l'orifice de passage (5) est ouvert, et une position fermée de prise étanche dans laquelle l'orifice de passage (5) est obturé par appui de contact étanche entre la tête de clapet (8, 8a,8b) et un siège de tête de clapet tronconique (10) ménagé dans le corps longitudinal (2) et dans le prolongement interne de l'orifice de passage (5), l'extrémité libre d'obturation (11) du clapet (1) s'étendant dans l'orifice de passage (5) en faisant au moins en partie saillie de l'extrémité de couplage (4),

le raccord étant caractérisé en ce que l'arête périmétrique annulaire (13) constitue l'unique surface d'appui de contact étanche entre la tête clapet (8, 8a,8b) et le siège de tête de clapet (10) lorsque la tête de clapet (8, 8a,8b) est dans sa position de prise étanche.
Le raccord de l'invention peut également comporter les caractéristiques optionnelles suivantes considérées isolément ou selon toutes les combinaisons techniques possibles :

- l'épaulement coaxial (12) de la tête de clapet (8,8a,8b) du clapet (7,7a,7b) s'étend transversalement à l'axe longitudinal (XX') jusqu'à l'arête périmétrique annulaire (13).
- selon une variante, la collerette coaxiale (14b) de la tête de clapet (8,8a,8b) du clapet (7,7a,7b) est cylindrique et s'étend longitudinalement depuis l'arête périmétrique annulaire (13) jusqu'à la base de jonction (15).
- selon une autre variante, la collerette coaxiale (14,14a) de la tête de clapet (8,8a,8b) du clapet (7,7a,7b) présente une première partie tronconique (161,161a) qui s'étend longitudinalement en s'élargissant depuis l'arête périmétrique annulaire (13) jusqu'à une seconde partie cylindrique (162,162a) qui s'étend longitudinalement jusqu'à la base de jonction (15)
- l'angle de base (A) de la première partie tronconique (161,161a) est inférieur à l'angle de base (B) du siège de tête de clapet (10) de sorte que l'arête annulaire (13) reste l'unique surface d'appui de contact étanche entre la tête de clapet (8,8a) et le siège de tête de clapet (10) lorsque la tête de clapet (8,8a) est dans sa position de prise étanche.
- le polymère thermoplastique fluoré est du polychlorotrifluoroethylene.
- le clapet (7,7a,7b) est réalisé en polychlorotrifluoroethylene.
- le siège de tête de clapet (10) est en acier inoxydable.
- le corps longitudinal (2) dudit raccord (1) est réalisé en acier inoxydable.

la surface (S) de l'arête annulaire (13) est définie selon la formule suivante [Math 6] :

$$S \leq l_0 \, \frac{F'_{1m}}{2R_t.E} \qquad \text{Formule 6}$$

Ou lo est l'épaisseur de la collerette coaxiale (14,14a) en millimètres,

F'1m est l'effort normal à la surface de l'arête périmétrique annulaire (13) en Newton résultant de l'application de l'effort des moyens d'actionnement (9) appliqué sur la base (15) de la tête clapet (8,8a,8b)
E est le module d'élasticité du matériau constituant l'arête périmétrique annulaire (13) en MPa, et
Rt est la rugosité de surface du siège de tête de clapet (10) du corps (2) du raccord (1) en millimètres.
le clapet (7,7a,7b) est en polychlorotrifluoroethylene de module d'élasticité compris entre en 1300 et 1500 MPa, le corps longitudinal (2) du raccord (1) est en acier inoxydable de rugosité Rt inférieure à 4 $\mu$m, de préférence inférieure

ou égale à 2 $\mu$m, l'effort F'1m est compris entre 25 et 45 Newtons, l'épaisseur de la collerette coaxiale est comprise entre 2 et 3 millimètres et la surface de l'arête annulaire (13) est inférieure à 34 mm2.

- la surface de l'arête annulaire (13) est inférieure à 12 mm2 et en ce que le rugosité Rt du siège de tête de clapet (10) est inférieure ou égale à 2 $\mu$m.
- les moyens d'actionnement (9) du déplacement de la tête de clapet (9) comportent un ressort (9) qui s'étend jusqu'à la base (15) de la collerette (14) de la tête de clapet (8,8a,8b) et qui sollicite la tête clapet (8,8a,8b) vers sa position de prise étanche par l'application d'un effort parallèle à l'axe longitudinal (XX') du raccord (1) et de la vanne à clapet (7).

Un autre aspect de l'invention concerne un dispositif de couplage de conduite de fluide, qui est caractérisé en ce qu'il comprend un premier raccord selon l'une quelconque des revendications 8 à 20 formant partie mâle et un second raccord (1') coopérant formant partie femelle, le second raccord comportant :

- un corps longitudinal (2') qui s'étend depuis une extrémité de jonction (3') à une seconde conduite (3') jusqu'à une extrémité de couplage (4') qui entoure l'extrémité de couplage (4) du premier raccord (1), laquelle extrémité de couplage (4') présente un orifice de passage du fluide (5') en communication fluidique avec un canal d'écoulement (6') ménagé dans le corps longitudinal (2') et qui s'étend depuis l'extrémité de couplage (4') jusqu'à l'extrémité de jonction (3'),
- un clapet (7') disposée dans le canal d'écoulement (6') du corps longitudinal (2') et comportant une tête clapet (8') située au niveau de l'orifice de passage (5') de l'extrémité de couplage (4') du corps longitudinal (2'), et qui est déplaçable longitudinalement dans le canal d'écoulement (6') par des moyens d'actionnement (9') entre une position dégagée dans laquelle l'orifice de passage (5') est ouvert, et une position de prise étanche dans laquelle l'orifice de passage (5') est obturé par appui de contact étanche entre la tête clapet (8') et un siège de tête de vanne tronconique (10') ménagé dans le corps longitudinal (2') et dans le prolongement de l'orifice de passage (5'),

et en ce que les têtes de clapets respectives (8,8a,8b ; 8') des premier et second raccords (1,1') sont en appui de contact longitudinal et soumises alternativement, par les moyens d'actionnement (9) associés à la tête de clapet (8,8a,8b) du premier raccord (1) et les moyens d'actionnement (9') associés à la tête de clapet (8') du second raccord (1'), en coopération avec la position relative des extrémités de couplage respectives (4,4') des premier (1) et second (1') raccords, à une position concomitante de dégagement des orifices de passage du fluide (5,5') des premier (1) et second (1') raccords, et à une position concomitante d'obturation des orifices de passage du fluide (5,5') des premier (1) et second (1') raccords.

L'invention et ses différentes applications seront mieux comprises à la lecture de la description qui suit et à l'examen des figures qui l'accompagnent.

**BREVE DESCRIPTION DES FIGURES**

D'autres caractéristiques et avantages de l'invention ressortiront à la lecture de la description qui suit, en référence aux figures annexées, qui illustrent :

[Fig. 1] La figure 1 est une représentation schématique en coupe longitudinale du raccord de l'invention lorsque le clapet, selon une première variante, est en position d'obturation de l'orifice de passage du fluide ;
[Fig. 2] La figure 2 est une représentation schématique en coupe longitudinale du dispositif de couplage de conduite de fluide de l'invention lorsque les orifices de passage du fluide des premier et second raccords sont concomitamment obturés, le clapet de l'invention, selon la première variante, du raccord de l'invention étant en position d'obturation ;
[Fig. 3] La figure 3 est une représentation schématique en coupe longitudinale de la zone de connexion fluidique du dispositif de couplage de conduite de fluide de l'invention lorsque les orifices de passage du fluide des premier et second raccords sont concomitamment dégagés, le clapet de l'invention, selon la première variante, du raccord de l'invention étant en position dégagée ;
[Fig. 4] La figure 4 est une représentation schématique en coupe longitudinale d'une partie du raccord de l'invention illustrant l'extrémité de couplage du raccord lorsque le clapet de l'invention, selon la première variante, est en position fermée étanche dans laquelle l'orifice de passage du fluide est obturé ;
[Fig. 5] La figure 5 est une représentation schématique en perspective du clapet de l'invention selon la première variante de réalisation ainsi qu'une partie agrandie de la collerette annulaire du clapet ;
[Fig. 6] La figure 6 est une représentation schématique de côté du clapet de l'invention selon une seconde variante de réalisation ainsi qu'une partie agrandie de la partie supérieure de la collerette annulaire du clapet ;
[Fig. 7] La figure 7 est une représentation schématique en perspective et en élévation du clapet de l'invention selon la seconde variante de réalisation ; et

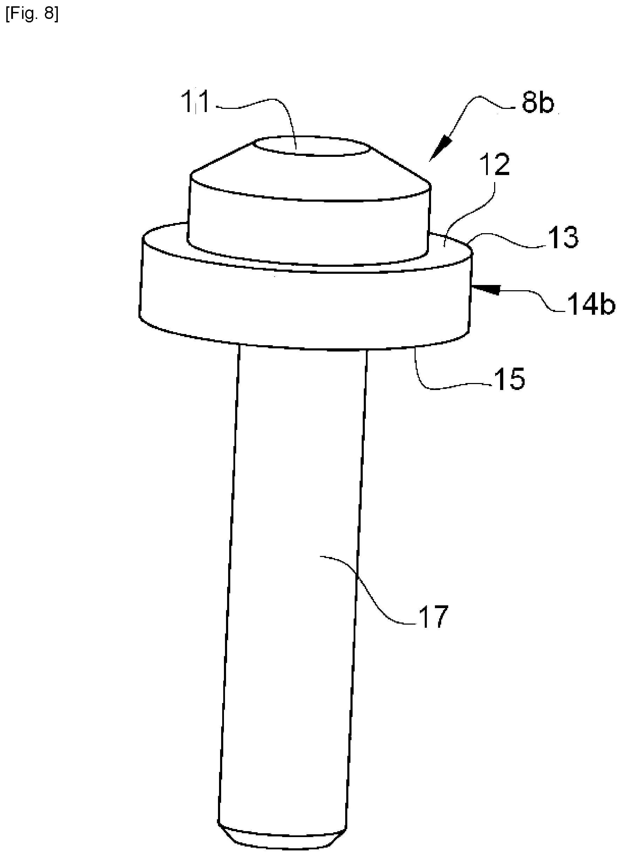

[Fig. 8] La figure 8 est une représentation schématique en perspective du clapet de l'invention selon une troisième variante de réalisation.

**DESCRIPTION DETAILLEE**

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent des variantes de l'invention mais qu'il peut exister d'autres modes de réalisation qui répondent à la définition de l'invention.

La présente invention porte principalement sur un clapet adapté à former partie d'un raccord mâle, lui-même partie d'un dispositif de couplage de conduite de fluide. L'invention s'applique également à un clapet adapté à former partie d'un raccord femelle d'un dispositif de couplage de conduite de fluide.

En s'inscrivant à l'encontre des raccords connus qui prévoient, pour assurer l'étanchéité du dispositif de couplage, une maximisation de la surface de contact entre la tête de clapet et la surface interne de contact du raccord, ainsi que, le cas échéant, l'adjonction d'un joint d'étanchéité, l'invention prévoit un clapet dont la surface de contact avec la surface interne du raccord est minimale et dont le matériau est sélectionné pour coopérer avec cette surface minimale de contact.

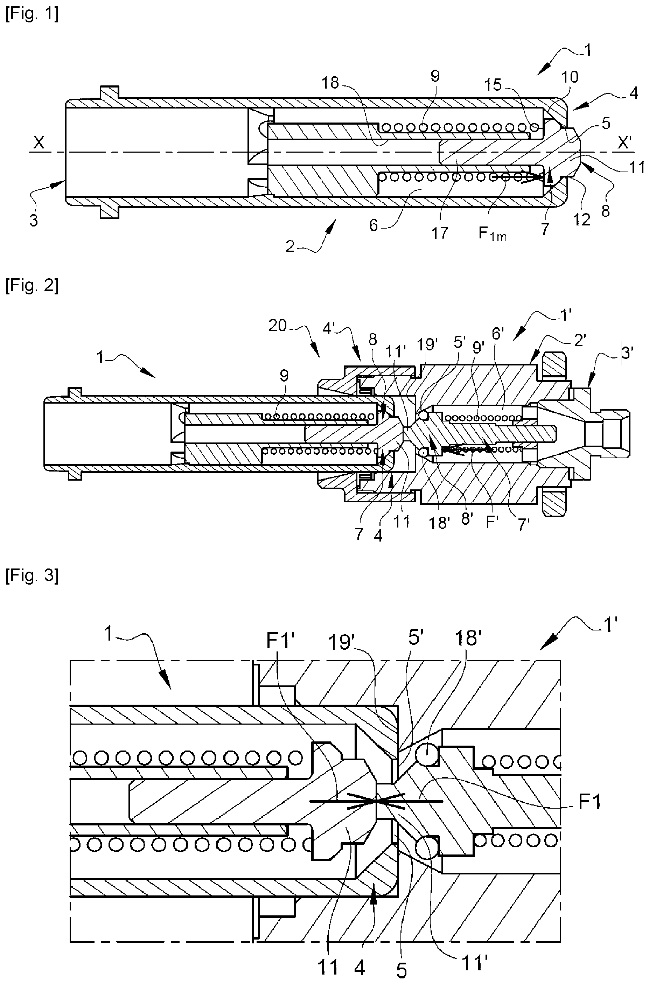

On décrit en premier lieu le raccord de l'invention et sa contextualisation de fonctionnement dans le dispositif de couplage en référence aux figures 1 à 3.

En référence à la figure 1, le raccord mâle 1 comporte un corps longitudinal 2 qui s'étend depuis une extrémité de jonction à une conduite 3 (la conduite n'est pas représentée) jusqu'à une extrémité de couplage 4 à un second raccord femelle 1' coopérant du dispositif de couplage 10 (figures 2 et 3), laquelle extrémité de couplage 4 présente un orifice de passage du fluide 5 en communication fluidique avec un canal d'écoulement 6 ménagé dans le corps longitudinal 2 et qui s'étend à l'intérieur du corps longitudinal 2 depuis l'extrémité de couplage 4 jusqu'à l'extrémité de jonction 3.

Le raccord mâle 1 comporte en outre un clapet 7 qui est disposé dans le canal d'écoulement 6 du corps longitudinal 2 du côté de l'extrémité de couplage. L'axe principal XX' du clapet 7 s'étend selon l'axe principal XX' du corps longitudinal 2. Le clapet 7 comporte une tête de clapet 8 qui est située au niveau de l'orifice de passage 5 de l'extrémité de couplage 4 du corps longitudinal 2. La tête de clapet 8 s'étend longitudinalement entre une extrémité libre 11 et une base de jonction 15 avec une tige longitudinale 17, laquelle tige 17 s'étend dans un guide tubulaire 18 du raccord 1 formant moyen de guidage longitudinal de la tige 17 dans le raccord 1.

La tête de clapet 8 est déplaçable longitudinalement dans le raccord 1 et plus particulièrement dans le canal d'écoulement 6 vers sa position d'obturation de l'orifice de passage 5, par l'application d'un effort F sur ladite tête clapet 8 par des moyens d'actionnement 9, ici un ressort hélicoïdal entourant le guide tubulaire 18 et s'étendant longitudinalement jusqu'à la base de jonction 15 de la tête de clapet 8. Lorsqu'aucune force extérieure n'est appliquée sur la tête de clapet 8, le ressort 9 au repos exerce une force F1m contre la base 15 de la tête de clapet 8 en entraînant la tête de clapet 8 dans l'orifice de passage 5 en position de prise étanche dans laquelle l'orifice de passage 5 est obturé par appui de contact étanche entre la tête de clapet 8 et un siège de tête de clapet tronconique 10 ménagé dans le corps longitudinal 2 et dans le prolongement interne de l'orifice de passage 5. Dans cette position, l'extrémité libre 11 de la tête de clapet 8 s'étend dans l'orifice de passage 5 en faisant saillie sur la quasi-totalité de sa hauteur de l'extrémité de couplage 4.

Le clapet 8 est également déplaçable longitudinalement dans le raccord 1, et plus particulièrement dans le canal d'écoulement 6, vers une position dégagée (figure 3) par l'action d'une force F1 exercée depuis l'extérieur du raccord 1 sur l'extrémité libre 11 de la tête de clapet 8 qui entraîne le ressort 9 en compression et l'ouverture de l'orifice de passage de fluide 5.

En référence aux figures 2 et 3, le dispositif de couplage de conduite de fluide 20 comporte le raccord mâle 1 précédemment décrit, et un second raccord femelle 1' qui comporte un corps longitudinal 2' qui s'étend depuis une extrémité de jonction à une seconde conduite 3' (la seconde conduite n'est pas illustrée) jusqu'à une extrémité de couplage 4' qui entoure l'extrémité de couplage 4 du raccord mâle 1 en présentant un évidement de logement de l'extrémité de couplage 4 comportant un fond 19' en regard de l'extrémité de couplage 4 du raccord mâle 1. Comme pour le raccord mâle 1, l'extrémité de couplage 4' présente un orifice de passage du liquide 5' en communication fluidique avec un canal d'écoulement 6' ménagé dans le corps longitudinal 2' et qui s'étend depuis l'extrémité de couplage 4' jusqu'à l'extrémité de jonction 3'.

Le raccord femelle 1' comporte un clapet 7' qui est disposé dans le canal d'écoulement 6' du corps longitudinal 2' et qui comporte une tête de clapet 8' située au niveau de l'orifice de passage 5' de l'extrémité de couplage 4' du corps longitudinal 2', et qui est déplaçable longitudinalement dans le canal d'écoulement 6' entre une position dégagée dans laquelle l'orifice de passage 5' est ouvert, et une position fermée de prise étanche dans laquelle l'orifice de passage 5' est obturé par appui de contact étanche entre la tête clapet 8' et le siège de tête de clapet tronconique 10' via un joint d'étanchéité 18'.

Comme pour le premier raccord 1, la tête de clapet 8' du raccord femelle 1' est déplaçable longitudinalement dans le raccord 1', et plus particulièrement dans le canal d'écoulement 6', vers sa position d'obturation de l'orifice de passage 5', par l'application d'un effort F' sur ladite tête de clapet 8' par des moyens d'actionnement 9', ici un ressort hélicoïdal entourant la tige du clapet 7' et s'étendant longitudinalement jusqu'à la tête du clapet 8'. Lorsqu'aucune force extérieure n'est appliquée sur la tête du clapet 8', le ressort 9' au repos exerce une force F' contre la base 15' du clapet 8' en entraînant la tête de clapet 8' dans l'orifice de passage 5' en position de prise étanche dans laquelle l'orifice de passage 5' est obturé. Dans cette position, l'extrémité libre 11' de la tête de clapet 8' s'étend dans l'orifice de passage 5' en faisant saillie de l'extrémité de couplage 4'.

La tête de clapet 8' est également déplaçable longitudinalement dans le raccord 1', et plus particulièrement dans le canal d'écoulement 6', vers une position dégagée (figure 3) par l'action d'une force F1' exercée depuis l'extérieur du raccord 1' sur l'extrémité libre 11' de la tête de clapet 8' qui entraîne le ressort 9' en compression et l'ouverture de l'orifice de passage de fluide 5'.

En fonctionnement, les têtes de clapets respectives 8,8' des clapets 7,7' des raccords mâle 1 et femelle 1' sont en appui de contact longitudinal et soumises alternativement à une position concomitante de dégagement des orifices de passage du fluide 5,5' des premier 1 et second 1' raccords (figure 3), et à une position concomitante d'obturation des orifices de passage du fluide 5,5' des premier 1 et second 1' raccords (figure 2). En d'autres termes, les têtes de clapets respectives 8,8' des clapets 7,7' des raccords mâle 1 et femelle 1' sont soumises à un mouvement alternatif qui les font passer de la position de dégagement des orifices de passage du fluide à la position d'obturation des orifices de passage du fluide.

Le passage de la position concomitante de dégagement à la position concomitante d'obturation met en jeu non seulement les ressorts 9,9' des raccords respectifs 1,1', mais également la position relative des extrémités de couplage respectives 4,4' des premier 1 et second 1' raccords.

Plus précisément, en position concomitante d'obturation des orifices de passage du fluide 5,5' des raccords mâle 1 et femelle 1' (figure 2), le fond 19' de l'évidemment de logement de l'extrémité de couplage 4' du raccord femelle 1' est à distance de l'extrémité de couplage 4 du raccord mâle 1 et les ressorts 9,9' au repos exercent chacun une force d'application F,F' sur les têtes de clapets 8,8' respectivement des raccords mâle 1 et femelle 1', ce dont il résulte que les orifices de passage du fluide 5,5' des raccords mâle 1 et femelle 1' sont tous les deux obturés.

En position concomitante de dégagement des orifices de passage du fluide 5,5' des raccords mâle 1 et femelle 1' (figure 3), le fond 19' de l'évidemment de logement de l'extrémité de couplage 4' du raccord femelle 1' est accolé à l'extrémité de couplage 4 du raccord mâle 1 de sorte que chaque tête de clapet 8,8' des clapets 7,7' des raccords mâle 1 et femelle 1' exerce à l'encontre de la tête de clapet 8',8 du clapet 7',7 de l'autre raccord une force F1',F1 qui entraîne les têtes de clapets 8,8' dans leur position dégagée, les orifices de passage de fluide correspondant 5,5' étant alors ouverts et les canaux d'écoulement 6,6' des raccords mâle 1 et femelle 1' mis en communication de fluide.

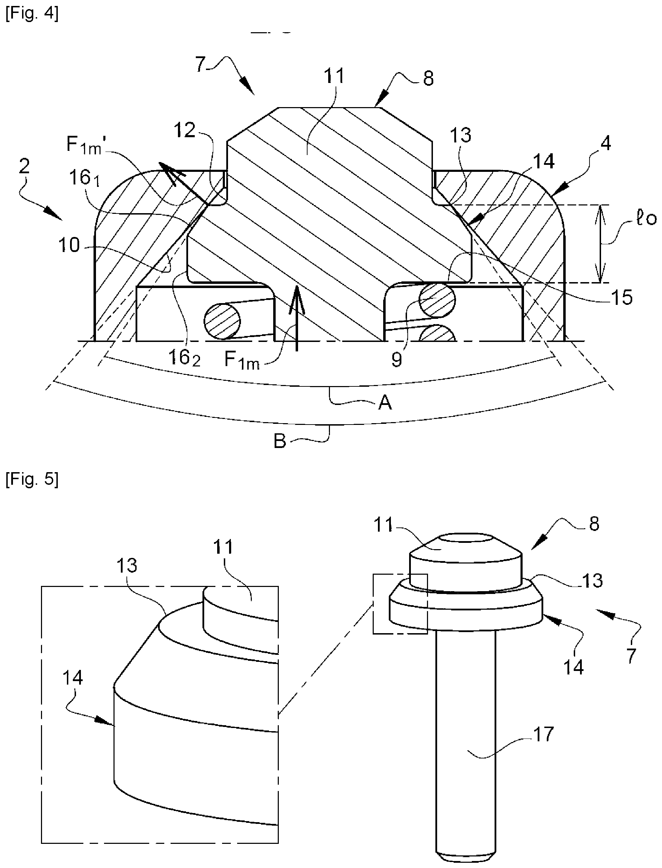

En référence aux figures 4 et 5, on décrit le clapet 7 de l'invention selon la première variante ainsi que le raccord 1 associé.

Selon l'invention, l'unique surface d'appui de contact étanche entre la tête de clapet 8 et le siège de tête de clapet 10 lorsque la tête de clapet 8 est dans sa position fermée de prise étanche et l'orifice de passage de fluide 5 obturé est une arête périmétrique annulaire 13.

A cet effet, l'extrémité libre d'obturation 11 de la tête de clapet 8 se prolonge vers la base de jonction 15 jusqu'à un épaulement coaxial 12 qui délimite avec la base 15 une collerette coaxiale 14 d'épaisseur lo. En d'autres termes, l'épaulement coaxial 12 forme jonction entre l'extrémité libre 11 et la collerette coaxiale 14 en élargissant le diamètre de la tête de clapet 8 depuis l'extrémité libre 11 vers la collerette 14, le diamètre moyen de la collerette 14 étant supérieur au diamètre moyen de l'extrémité libre 11. L'épaulement coaxial 12 s'étend radialement jusqu'à une arête périmétrique annulaire 13 qui fait partie de la collerette coaxiale 14 en la surmontant. Est inclus dans l'extension radiale de l'épaulement 12, un épaulement qui s'étend transversalement à l'axe longitudinal du clapet mais également, à titre d'exemple, un épaulement 12 qui s'étend de façon tronconique. L'épaulement coaxial 12 s'étend de préférence transversalement en formant un angle droit entre l'extrémité libre 11 et la collerette 14, jusqu'à l'arête périmétrique annulaire 13. Cette arête périmétrique annulaire 13 présente ainsi un diamètre supérieur au diamètre de l'extrémité libre 11 afin que le contact entre le clapet 8 et le siège tronconique 10 du raccord 1 ne puisse s'opérer qu'au moyen de l'arête annulaire 13.

On entend par arête périmétrique une configuration linéaire de la partie en contact entre le clapet 8 et la siège 10 ce qui est une caractéristique essentielle de l'invention. Néanmoins, cette configuration linéaire se matérialise physiquement par une surface, notamment lors de l'effort d'appui de contact de l'arête 13 contre le siège de tête de clapet tronconique 10 ménagé dans le corps longitudinal 2, c'est pourquoi le terme de surface de contact pourra être utilisé dans le reste de la description sans échapper à la configuration linéaire de l'arête 13.

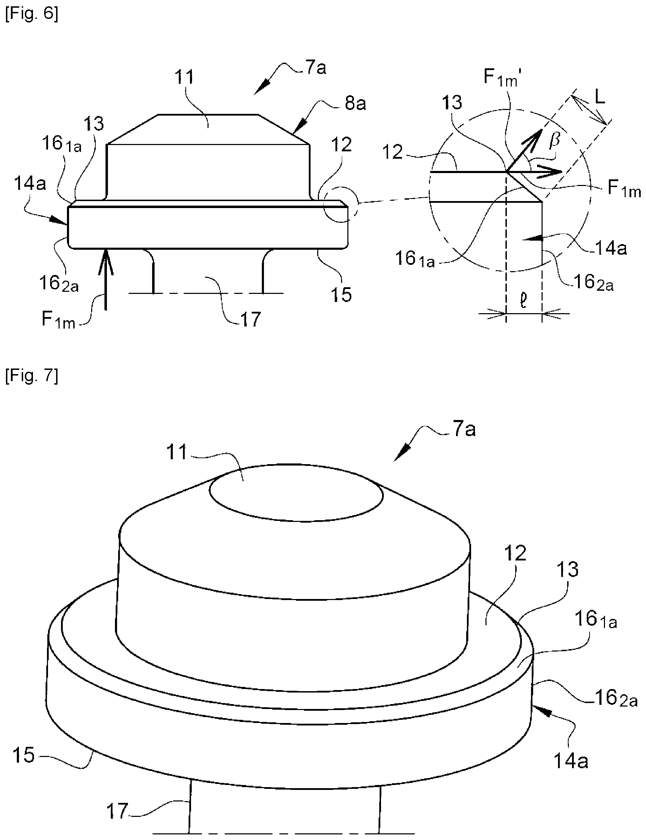

L'unique différence entre les deux variantes de réalisation des figures 4 et 5 et des figures 6 et 7 porte sur le dimensionnement de la configuration de la collerette coaxiale 14. Dans le premier mode de réalisation des figures 4 et 5, la collerette 14 présente une première partie tronconique $16_1$ qui s'étend longitudinalement en s'élargissant depuis l'arête annulaire 13 jusqu'à une seconde partie cylindrique $16_2$ qui s'étend longitudinalement jusqu'à la base de jonction 15. Selon cette variante, la hauteur de la première partie tronconique $16_1$ est sensiblement identique à la hauteur de la seconde partie cylindrique $16_2$. Dans le second mode de réalisation des figures 6 et 7, la collerette 14a de la tête de vanne 8a de la vanne 7a présente également une première partie tronconique $16_1$a qui s'étend longitudinalement en s'élargissant depuis l'arête annulaire 13 jusqu'à une seconde partie cylindrique $16_2$a qui s'étend longitudinalement jusqu'à la base 15. Selon cette variante, la hauteur de la première partie tronconique $16_1$a est substantiellement inférieure à la hauteur de la seconde partie cylindrique $16_2$a.

Dans ces deux configurations, l'angle de base A de la première partie tronconique $16_1$, $16_1$a est inférieur à l'angle de base B du siège de tête de clapet tronconique 10 ménagé dans le corps longitudinal 2 (figure 4) de sorte que l'arête annulaire 13 reste l'unique zone de contact étanche entre la tête de clapet 8 et le siège de tête de clapet 10 lorsque la tête de clapet 8 est dans sa position fermée en prise étanche.

Selon la troisième variante de réalisation de l'invention, la collerette coaxiale 14b de la tête de clapet 8b du clapet 7b présente une unique partie cylindrique qui s'étend depuis l'épaulement 12, et ainsi depuis l'arête annulaire 13, jusqu'à la base de jonction 15.

Les autres références relatives à la constitution commune des trois variantes sont reprises à l'identique pour ces trois variantes.

En outre et afin d'assurer l'application d'une pression suffisante pour réaliser l'étanchéité requise et conférer des propriétés qui sont énoncées ci-dessous, l'arête périmétrique 13, et de préférence l'ensemble du clapet 7,7a,7b est en polymère thermoplastique fluoré et préférentiellement en polychlorotrifluoroethylene (PCTFE). Le PCTFE confère les propriétés avantageuses suivantes :

- une résistance mécanique importante (rigidité, résistance à la traction/compression, résistance au fluage).
- une conservation des propriétés mécaniques et caractéristiques dimensionnelles en température cryogénique grâce à son très faible taux de dilatation thermique. Cela permet de l'utiliser pour des composants structurels à sollicitation relativement importante pour un thermoplastique,
- une capacité d'absorption d'humidité quasi-nulle qui permet de réduire le risque d'infiltration d'humidité dans la matière qui peut se solidifier à température cryogénique et donc fragiliser la matière,
- une stabilité chimique face à des agents oxydants/corrosifs grâce à l'absence d'atome d'hydrogène dans sa composition,
- une importante tenue à l'inflammabilité, ce qui est un avantage considérable pour un usage intégrant de l'oxygène liquide sous pression,
- une très bonne usinabilité permettant de tenir des tolérances dimensionnelles et des états de surface stricts.

A cet effet, le clapet 7,7a,7b peut être réalisé par usinage et décolletage à partir d'une barre de polychlorotrifluoroethylene brut. Ce polymère présente un module d'élasticité d'environ 1400 MPa, qui permet, pour une surface minimum telle que configurée par une arête annulaire, d'écraser suffisamment les défauts de surface du siège, généralement en métal et plus particulièrement en acier inoxydable comme l'ensemble du corps longitudinal 2 du raccord 1.

Le critère essentiel de l'invention réside dans la présence d'une arête annulaire 13 comme unique surface de contact entre le clapet 8,8a,8b et le siège 10 et qui conduisent à définir une surface de l'arête annulaire inférieure à 12 mm$^2$ lui conférant ainsi sa géométrie linéaire propre à une arête.

Au lieu de maximiser la surface de contact entre la tête de clapet 8 et le siège de tête de clapet 10 pour éviter les risques de fuites, il a été considéré, au contraire, qu'il s'agissait de considérer plutôt d'évaluer la pression à appliquer sur la surface du siège de tête de clapet pour déformer les irrégularités de surface jusqu'à leur écrasement, permettant ainsi d'assurer l'étanchéité requise. En effet, ce sont les défauts de surface qui peuvent générer des chemins de fuites, dites fuites d'interface, à l'encontre de l'étanchéité requise.

Poursuivant dans cette considération, pour réduire les fuites d'interface, il convient alors de réduire au maximum les aspérités de surface. La pression appliquée par le clapet sur le siège de tête de clapet du raccord doit alors être adaptée au matériau et à l'état de surface de ce matériau pour assurer la déformation et l'écrasement des défauts de surface ce qui engendre une surface de contact entre le clapet et le siège de tête de clapet qui est faible.

Ainsi, la pression appliquée Ps doit être supérieure ou égale à la contrainte σ nécessaire pour déformer l'irrégularité de surface la plus importante de la pièce jusqu'à son aplatissement. [Math 1]

$$Ps \geq \sigma \quad \text{avec} \quad \sigma = E.\varepsilon \text{ (loi de Hooke)} \quad \text{Formule 1}$$

Où E est le module d'élasticité de la surface de l'arête annulaire (ou du clapet si celui-ci est monomatière), et

ε la déformation qui peut s'exprimer de la façon suivante [Math 2]:

$$\varepsilon = \frac{\Delta L}{l_0} \qquad \text{Formule 2}$$

Où ∆L est la déformation de la plus grande aspérité de surface que l'on peut définir comme étant égale à 2 fois la rugosité de surface Rt la plus importante des deux surfaces en contact (le clapet et le siège ), et lo est l'épaisseur de la collerette annulaire 14,14a,14b

On peut ainsi définir que la pression superficielle à appliquer doit répondre à la formule suivante [Math 3] :

$$Ps \geq E.\frac{2R_t}{l_0} \qquad \text{Formule 3}$$

Dans le raccord de l'invention, la pression exercée sur le clapet est issue de l'effort de précontrainte du ressort 9 sur le clapet dans sa position fermée et se définit par la formule suivante [Math 4] :

$$Ps = \frac{F_{1m}}{S} \qquad \text{Formule 4}$$

Où S est la surface de contact entre la tête de clapet et le siège de tête de clapet du raccord soit la surface de l'arête annulaire, et
$F_{1m}$ est l'effort de précontrainte du ressort 9 sur la base 15 du clapet.

Compte tenu du fait que l'effort $F_{1m}$ est appliqué sur la base 15 de la tête du clapet 8 tandis que l'étanchéité est réalisée sur la surface de l'arête annulaire 13, on évalue l'effort normal $F'_{1m}$ à la surface de l'arête annulaire 13 par la formule suivante [Math 5] :

$$F'_{1m} = F_{1m} * \cos(\beta) \qquad \text{Formule 5}$$

Où β est l'angle formé par l'axe d'application de l'effort normal $F'_{1m}$ et l'axe d'application de l'effort $F_{1m}$ exercé longitudinalement sur la base 15 de la tête de clapet 8.
On peut alors évaluer la surface S de l'arête annulaire 13 par la formule suivante [Math 6] :

$$S \leq l_0 \frac{F'_{1m}}{2R_t.E} \qquad \text{Formule 6}$$

Ou lo est l'épaisseur de la collerette coaxiale en millimètres,
$F'_{1m}$ est l'effort normal à la surface de l'arête périmétrique annulaire 13 en Newton résultant de l'application de l'effort des moyens d'actionnement 9 appliqué sur la base 15 de la tête de vanne
E est le module d'élasticité du matériau de l'arête périmétrique annulaire 13 en MPa, et
Rt est la rugosité de surface du siège de tête de clapet 10 du raccord 1,1a en millimètres.

Cette formule pourrait être considérée dans un autre sens en cherchant par exemple à établir la valeur de l'effort $F_{1m}$ à fournir par le ressort sur la base 15 de la tête de clapet 8, 8a,8b connaissant la surface S de l'arête annulaire et la rugosité de surface Rt du matériau constituant le siège du raccord, ou alternativement en cherchant l'état de surface (Rt) du siège de tête de clapet connaissant l'effort $F_{1m}$ fournit par le ressort sur la base 15 de la tête de clapet 8,8a,8b et la surface S de l'arête annulaire.
Selon l'invention, il a été établi de s'adapter aux corps de raccords existants en ne modifiant que la forme du clapet 7,7a,7b, et plus précisément de la tête de clapet 8,8a,8b, et en adaptant le ressort 9 pour l'application de la pression requise.
Selon un exemple de réalisation, le clapet 7,7a,7b est en polychlorotrifluoroethylene de module d'élasticité compris entre en 1300 et 1500 MPa, le corps longitudinal du raccord est en acier inoxydable de rugosité Rt inférieure à 4 μm, de préférence inférieure ou égale à 2 μm, l'effort $F'_{1m}$ est compris entre 25 et 45 Newtons, l'épaisseur de la collerette coaxiale est comprise entre 2 et 3 millimètres. En appliquant la formule précédemment établie, la surface de l'arête annulaire 13 doit ainsi être inférieure à 34 $mm^2$.

Plus précisément, lorsque l'effort F1m du ressort 9 sur la base 15 de la tête de clapet 8,8a est de 36 Newtons, l'angle de base A de la première partie tronconique $16_1$, $16_1$a de la tête de clapet 8,8a est de 74° (l'effort normal F'1m est alors de 28,7 Newton), la rugosité de surface Rt du siège de tête de vanne du raccord en acier inoxydable est de 0,002 millimètres et le module d'élasticité du clapet 7,7a,7b en polychlorotrifluoroethylene est de 1400 MPa, alors la surface de l'arête annulaire 13 est inférieure à 12 mm$^2$.

On utilisera plus préférentiellement une surface de l'arête annulaire 13 inférieure à 10 mm$^2$, par exemple de 9,91 mm$^2$ pour un périmètre annulaire de 58,18 mm. Une telle condition engendre la réalisation d'une surface annulaire de longueur de 0,3 millimètres et de largeur de 0,2 millimètres ;

Des tests de taux de fuite ont été réalisés à partir du clapet ainsi défini (PCTFE, surface de l'arête annulaire de 9,91, effort normal F'1m de 28,7 Newton) en faisant varier la rugosité de surface du siège de tête de clapet (ou du corps longitudinal du raccord si ce dernier est monomatière). Les résultats sont présentés dans le Tableau ci-dessous [Table 1] :

Tableau 1

| Numéro d'essai | Rt (en $\mu$m) | Taux de fuite (en mbar.l/s à 1,45 Bar |
|---|---|---|
| 1 | <u>4,3</u> | <u>$10^{-2}$</u> |
| 2 | <u>4</u> | <u>$10^{-2}$</u> |
| 3 | 3,5 | $10^{-3}$ |
| 4 | 2 | $10^{-7}$ |

On constate que si les essais 1 et 2 ne répondent pas au critère limite de $10^{-3}$ mbar.l/s, les essais 3 et 4 répondent à ce critère limite.

Considérant la formule 7 ci-dessus pour établir le critère de la rugosité de surface Rt du siège de tête de vanne à appliquer, on obtient la formule suivante [Math 7] :

$$R_t \leq l_0 \frac{F'_{1m}}{2.S.E} \qquad \text{Formule 7}$$

Pour le clapet ainsi défini, on obtient un Rt inférieure ou égal à 2$\mu$m, ce qui correspond d'après les résultats du Tableau à un taux de fuite de $10^{-7}$ mbar.l/s, bien en deçà du critère limite, ce qui permet d'assurer une marge de dégradation suffisamment importante pour que la performance du raccord soit maintenue pendant toute la durée de vie de la pièce. On définira ainsi que la rugosité de surface doit être préférentiellement inférieure à 3,5$\mu$m.

Ainsi, sans être tenu par une quelconque théorie, il est démontré qu'en cherchant, à l'inverse de l'art antérieur, l'écrasement des irrégularités de surface du clapet au lieu de maximiser la surface de contact entre le clapet et le siège de tête de clapet, la surface de contact définie est minime sous la forme d'une arête annulaire de surface inférieure à 34 mm$^2$, de préférence inférieure à 12 mm$^2$, réalisée en polychlorotrifluoroethylene.

L'invention porte enfin également sur le dispositif dans son entier tel qu'il a été précédemment décrit en référence aux figures 2 et 3 et comportant le raccord mâle tel que défini, ainsi que le raccord femelle coopérant.

Le clapet ainsi que le raccord résultant de l'invention permettent ainsi d'assurer des hautes performances d'étanchéité pendant toute la durée de vie de la pièce, et une ouverture manuelle rendue difficile par la faible surface d'appui qui augmente la pression nécessaire à l'ouverture.

**Revendications**

1. Clapet (7,7a,7b) pour raccord (1) de dispositif de couplage de conduite de fluide (4), qui s'étend selon un axe principal longitudinal (XX') et qui présente une tête de clapet (8,8a,8b) surmontant une tige (17), **caractérisé en ce que** ladite tête de clapet (8,8a,8b) présente une extrémité libre (11) destinée à faire au moins en partie saillie de l'extrémité de couplage (4) du raccord (1) en position fermée de prise étanche, laquelle extrémité libre (11) se prolonge par une collerette coaxiale (14) jusqu'à une base de jonction (15) avec la tige (17), **en ce qu'**un épaulement coaxial (12) forme jonction entre l'extrémité libre (11) et la collerette coaxiale (14), lequel épaulement coaxial (12) s'étend radialement jusqu'à une arête périmétrique annulaire (13) qui surmonte la collerette coaxiale (14) et qui présente un diamètre supérieur au diamètre de ladite extrémité libre (11), et **en ce que** l'arête périmétrique annulaire (13) est en polymère thermoplastique fluoré.

2. Clapet selon la revendication précédente, **caractérisé en ce que** l'épaulement coaxial (12) s'étend transversalement à l'axe longitudinal (XX') jusqu'à l'arête périmétrique annulaire (13).

3. Clapet selon l'une quelconque des revendications 1 et 2, **caractérisé en ce que** la collerette coaxiale (14b) est cylindrique et s'étend longitudinalement depuis l'arête périmétrique annulaire (13) jusqu'à la base de jonction (15).

4. Clapet selon l'une quelconque des revendications 1 et 2, **caractérisé en ce que** la collerette coaxiale (14,14a) présente une première partie tronconique ($16_1$,$16_1$a) qui s'étend longitudinalement en s'élargissant depuis l'arête périmétrique annulaire (13) jusqu'à une seconde partie cylindrique ($16_2$,$16_2$a) qui s'étend longitudinalement jusqu'à la base de jonction (15)

5. Clapet selon l'une quelconque des revendications précédentes, **caractérisée en ce que** le polymère thermoplastique fluoré est du polychlorotrifluoroethylene.

6. Clapet selon la revendication précédente, **caractérisée en ce qu'**il est réalisé en polychlorotrifluoroethylene.

7. Clapet selon l'une quelconque des revendications précédentes, **caractérisé en ce que** la surface de l'arête périmétrique annulaire (13) est inférieure à 12mm$^2$.

8. Raccord destiné à former partie mâle d'un dispositif de couplage de conduite de fluide, **caractérisé en ce qu'**il comporte :

   - un corps longitudinal (2) qui s'étend depuis une extrémité de jonction à une conduite (3) jusqu'à une extrémité de couplage (4) à un second raccord coopérant du dispositif de couplage, laquelle extrémité de couplage (4) présente un orifice de passage du fluide (5) en communication fluidique avec un canal d'écoulement (6) ménagé dans le corps longitudinal (2) et qui s'étend depuis l'extrémité de couplage (4) jusqu'à l'extrémité de jonction (3),
   - un clapet (7,7a,7b) selon l'une quelconque des revendications 1 à 7, disposé dans le canal d'écoulement (6) du corps longitudinal (2), dont l'axe principal s'étend selon l'axe principal (XX') du corps longitudinal (2) du raccord (1), et qui comporte une tête de clapet (8,8a,8b) surmontant une tige (17), laquelle tête de clapet (8, 8a, 8b) est située au niveau de l'orifice de passage (5) de l'extrémité de couplage (4) du corps longitudinal (2), s'étend longitudinalement entre son extrémité libre (11) et la base de jonction (15) avec la tige longitudinale (17), et est déplaçable longitudinalement dans le canal d'écoulement (6) par l'application d'un effort (F) sur ladite tête de clapet (8,8a8b) par des moyens d'actionnement (9) entre une position dégagée dans laquelle l'orifice de passage (5) est ouvert, et une position fermée de prise étanche dans laquelle l'orifice de passage (5) est obturé par appui de contact étanche entre la tête de clapet (8, 8a,8b) et un siège de tête de clapet tronconique (10) ménagé dans le corps longitudinal (2) et dans le prolongement interne de l'orifice de passage (5), l'extrémité libre d'obturation (11) du clapet (1) s'étendant dans l'orifice de passage (5) en faisant au moins en partie saillie de l'extrémité de couplage (4),

   et **en ce que** l'arête périmétrique annulaire (13) constitue l'unique surface d'appui de contact étanche entre la tête clapet (8, 8a,8b) et le siège de tête de clapet (10) lorsque la tête de clapet (8, 8a,8b) est dans sa position de prise étanche.

9. Raccord selon la revendication précédente, **caractérisé en ce que** l'angle de base (A) de la première partie tronconique ($16_1$,$16_1$a) est inférieur à l'angle de base (B) du siège de tête de clapet (10) de sorte que l'arête annulaire (13) reste l'unique surface d'appui de contact étanche entre la tête de clapet (8,8a) et le siège de tête de clapet (10) lorsque la tête de clapet (8,8a) est dans sa position de prise étanche.

10. Raccord selon l'une quelconque des revendications précédentes, **caractérisé en ce que** le siège de tête de clapet (10) et de préférence le corps longitudinal (2) dudit raccord (1) est en acier inoxydable.

11. Raccord selon l'une quelconque des revendications 8 à 10, **caractérisé en ce que** la surface (S) de l'arête annulaire (13) est définie selon la formule suivante :

$$S \leq l_0 \frac{F'_{1m}}{2R_t.E}$$

Ou lo est l'épaisseur de la collerette coaxiale (14,14a) en millimètres,

F'$_{1m}$ est l'effort normal à la surface de l'arête périmétrique annulaire (13) en Newton résultant de l'application de l'effort des moyens d'actionnement (9) appliqué sur la base (15) de la tête clapet (8,8a,8b)

E est le module d'élasticité du matériau constituant l'arête périmétrique annulaire (13) en MPa, et

Rt est la rugosité de surface du siège de tête de clapet (10) du corps (2) du raccord (1) en millimètres.

12. Raccord selon la revendication précédente, **caractérisé en ce que** le clapet (7,7a,7b) est en polychlorotrifluoroethylene de module d'élasticité compris entre en 1300 et 1500 MPa, le corps longitudinal (2) du raccord (1) est en acier inoxydable de rugosité Rt inférieure à 4 $\mu$m, de préférence inférieure ou égale à 2 $\mu$m, l'effort F'$_{1m}$ est compris entre 25 et 45 Newtons, l'épaisseur de la collerette coaxiale est comprise entre 2 et 3 millimètres et la surface de l'arête annulaire (13) est inférieure à 34 mm$^2$.

13. Raccord selon la revendication précédente, **caractérisé en ce que** la surface de l'arête annulaire (13) est inférieure à 12 mm$^2$ et **en ce que** le rugosité Rt du siège de tête de clapet (10) est inférieure ou égale à 2 $\mu$m.

14. Raccord selon l'une quelconque des revendications 8 à 13, **caractérisé en ce que** les moyens d'actionnement (9) du déplacement de la tête de clapet (9) comportent un ressort (9) qui s'étend jusqu'à la base (15) de la collerette (14) de la tête de clapet (8,8a,8b) et qui sollicite la tête clapet (8,8a,8b) vers sa position de prise étanche par l'application d'un effort parallèle à l'axe longitudinal (XX') du raccord (1) et de la vanne à clapet (7).

15. Dispositif de couplage de conduite de fluide, **caractérisé en ce qu'**il comprend un premier raccord selon l'une quelconque des revendications 8 à 14 formant partie mâle et un second raccord (1') coopérant formant partie femelle, le second raccord comportant :

- un corps longitudinal (2') qui s'étend depuis une extrémité de jonction (3') à une seconde conduite (3') jusqu'à une extrémité de couplage (4') qui entoure l'extrémité de couplage (4) du premier raccord (1), laquelle extrémité de couplage (4') présente un orifice de passage du fluide (5') en communication fluidique avec un canal d'écoulement (6') ménagé dans le corps longitudinal (2') et qui s'étend depuis l'extrémité de couplage (4') jusqu'à l'extrémité de jonction (3'),

- un clapet (7') disposée dans le canal d'écoulement (6') du corps longitudinal (2') et comportant une tête clapet (8') située au niveau de l'orifice de passage (5') de l'extrémité de couplage (4') du corps longitudinal (2'), et qui est déplaçable longitudinalement dans le canal d'écoulement (6') par des moyens d'actionnement (9') entre une position dégagée dans laquelle l'orifice de passage (5') est ouvert, et une position de prise étanche dans laquelle l'orifice de passage (5') est obturé par appui de contact étanche entre la tête clapet (8') et un siège de tête de vanne tronconique (10') ménagé dans le corps longitudinal (2') et dans le prolongement de l'orifice de passage (5'),

et **en ce que** les têtes de clapets respectives (8,8a,8b ; 8') des premier et second raccords (1,1') sont en appui de contact longitudinal et soumises alternativement, par les moyens d'actionnement (9) associés à la tête de clapet (8,8a,8b) du premier raccord (1) et les moyens d'actionnement (9') associés à la tête de clapet (8') du second raccord (1'), en coopération avec la position relative des extrémités de couplage respectives (4,4') des premier (1) et second (1') raccords, à une position concomitante de dégagement des orifices de passage du fluide (5,5') des premier (1) et second (1') raccords, et à une position concomitante d'obturation des orifices de passage du fluide (5,5') des premier (1) et second (1') raccords.

[Fig. 1]

[Fig. 2]

[Fig. 3]

[Fig. 4]

[Fig. 5]

[Fig. 6]

[Fig. 7]

[Fig. 8]

Europäisches Patentamt
European Patent Office
Office européen des brevets

## RAPPORT DE RECHERCHE EUROPEENNE

Numéro de la demande

EP 25 21 7772

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 0 344 582 A1 (EM TECH GMBH [DE]) 6 décembre 1989 (1989-12-06) | 1,7 | INV. F16L29/04 |
| A | * colonne 4, ligne 39 - ligne 43; figures * | 8-15 | F16L37/34 |
| | ----- | | |
| X | GB 828 964 A (AVIMO LTD) 24 février 1960 (1960-02-24) * page 3, ligne 47 - ligne 50; figures * | 1-3,7 | |
| | ----- | | |
| X | EP 3 156 705 A1 (SURPASS IND CO LTD [JP]) 19 avril 2017 (2017-04-19) * alinéa [0051] - alinéa [0052]; figures * | 1,2,4-7 | |
| | ----- | | |
| X,P | WO 2025/049445 A1 (COLDER PROD CO [US]) 6 mars 2025 (2025-03-06) * alinéa [0053] - alinéa [0071]; figures * | 1,2,4,7 | |
| | ----- | | |

### DOMAINES TECHNIQUES RECHERCHES (IPC)

F16L

Le présent rapport a été établi pour toutes les revendications

| Lieu de la recherche | Date d'achèvement de la recherche | Examinateur |
|---|---|---|
| Munich | 26 mars 2026 | dall'Amico, Mauro |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................................
& : membre de la même famille, document correspondant

EPO FORM 1503 03.82 (P04C02)

**EP 4 749 171 A1**

## ANNEXE AU RAPPORT DE RECHERCHE EUROPEENNE
## RELATIF A LA DEMANDE DE BREVET EUROPEEN NO.

EP 25 21 7772

26-03-2026

| Document brevet cité au rapport de recherche | | Date de publication | Membre(s) de la famille de brevet(s) | | Date de publication |
|---|---|---|---|---|---|
| EP 0344582 | A1 | 06-12-1989 | AT | E67570 T1 | 15-10-1991 |
| | | | DE | 3819024 A1 | 14-12-1989 |
| | | | EP | 0344582 A1 | 06-12-1989 |
| GB 828964 | A | 24-02-1960 | AUCUN | | |
| EP 3156705 | A1 | 19-04-2017 | EP | 3156705 A1 | 19-04-2017 |
| | | | JP | 5987100 B1 | 06-09-2016 |
| | | | JP | 2017075674 A | 20-04-2017 |
| | | | KR | 20170045122 A | 26-04-2017 |
| | | | US | 2017108149 A1 | 20-04-2017 |
| WO 2025049445 | A1 | 06-03-2025 | AUCUN | | |

EPO FORM P0460